# EUROPEAN PATENT SPECIFICATION

(11) **EP 1 887 871 B1**
(45) Date of publication and mention of the grant of the patent: **11.06.2014**
(21) Application number: 06770581.4
(22) Date of filing: 18.05.2006
(51) Int. Cl.: A01P 1/00, A01N 37/44, A01N 43/50, A01N 47/44, A01N 59/16, A01N 59/20

(54) **ANTIMICROBIAL COMPOSITION**
ANTIMIKROBIELLE ZUSAMMENSETZUNG
COMPOSITION ANTIMICROBIENNE

(30) Priority: 19.05.2005 US 132946
(43) Date of publication of application: 20.02.2008
(73) Proprietor: ETHICON, INC., Somerville, New Jersey 08876-0151 (US)
(72) Inventor: MING, Xintian, Bridgewater, New Jersey 08807 (US); ROTHENBURGER, Stephen J., Neshanic Station, New Jersey 08853 (US)
(74) Representative: Kirsch, Susan Edith
(86) International application number: PCT/US2006/019275
(87) International publication number: WO 2006/125099

(56) References cited:
- WO-A1-00/62618
- WO-A2-2005/000254
- DE-B- 1 139 738
- US-A1- 2005 031 551
- US-B1- 6 224 579
- DATABASE CAPLUS [Online] CHEMICAL ABSTRACTS SERVICE, COLUMBUS, OHIO, US; TERAI, MAKOTO: "Anti-microbial cosmetics having low skin irritancy" XP002413312 retrieved from STN Database accession no. 1998:115867 & JP 10 045563 A (NOEVIR CO., LTD., JAPAN) 17 February 1998 (1998-02-17)
- DATABASE CAPLUS [Online] CHEMICAL ABSTRACTS SERVICE, COLUMBUS, OHIO, US; TANDA, KAZUTOSHI: "Storage-stable antiperspirant and deodorant gels containing N-acyl amino acids" XP002413313 retrieved from STN Database accession no. 2000:833248 & JP 2000 327546 A (NOEVIR CO., LTD., JAPAN) 28 November 2000 (2000-11-28)
- DATABASE WPI Week 198431 Derwent Publications Ltd., London, GB; AN 1984-192106 XP002413316 & JP 59 108707 A (LION CORP) 23 June 1984 (1984-06-23) & JP 59 108707 A (LION CORP) 23 June 1984 (1984-06-23)
- DATABASE CAPLUS [Online] CHEMICAL ABSTRACTS SERVICE, COLUMBUS, OHIO, US; ARASHIMA, MASAKI ET AL: "Anti-bacterial low-irritancy cosmetics" XP002413314 retrieved from STN Database accession no. 1998:501113 & JP 10 203954 A (NOEVIR CO., LTD., JAPAN) 4 August 1998 (1998-08-04) & JP 10 045563 A (NOEVIR KK) 17 February 1998 (1998-02-17)
- G. BAKAL & A. DIAZ: "The lowdown on lauric arginate" FOOD QUALITY MAGAZINE, [Online] March 2005 (2005-03), XP002413311 Retrieved from the Internet: URL:http://www.abingredients.com/cgi-bin/n ews/viewnews.pl?id=EEEkZFkZEEZMFlytFO&tmpl =release> [retrieved on 2007-01-05]

## Description

### FIELD OF INVENTION

This invention relates to a novel antimicrobial composition comprising (a) a cationic surfactant derived from the condensation of fatty acids and esterified dibasic amino acids, and (b) an antimicrobial metal. More specifically, this invention relates to a novel antimicrobial composition comprising lauric arginate (LAE) and elemental silver, alloys thereof or silver compounds. The present invention also relates to medical devices utilizing such novel antimicrobial compositions.

### BACKGROUND OF THE INVENTION

Each year, patients undergo a vast number of surgical procedures in the United States. Current data shows about twenty-seven million procedures are performed per year. Postoperative or surgical site infections ("SSIs") occur in approximately two to three percent of all cases. This amounts to more than 675,000 SSIs each year.

Whenever a medical device is used in a surgical setting, a risk of infection is created. The risk of infection dramatically increases for invasive or implantable medical devices, such as intravenous catheters, arterial grafts, intrathecal or intracerebral shunts and prosthetic devices, which create a portal of entry for pathogens while in intimate contact with body tissues and fluids. The occurrence of SSIs is often associated with bacteria that colonize on the medical device. For example, during a surgical procedure, bacteria from the surrounding atmosphere may enter the surgical site and attach to the medical device. Bacteria can use the implanted medical device as a pathway to surrounding tissue. Such bacterial colonization on the medical device may lead to infection and morbidity and mortality to the patient.

A number of methods for reducing the risk of infection associated with invasive or implantable medical devices have been developed that incorporate antimicrobial agents into the medical devices. Such devices desirably provide effective levels of antimicrobial agent while the device is being used. For example, medical devices may contain a single antimicrobial agent such as silver. However, medical devices containing a single antimicrobial agent can suffer loss of efficacy resulting from low concentrations of the agent on the device. For instance, although silver compounds are known to be efficacious antimicrobial agents, such compounds may cause undesired changes in physical properties of medical devices. Therefore, it is often necessary to limit the amount of the silver compound in the design of medical devices.

One potential solution to this problem is to use a combination of antimicrobial agents that requires relatively low concentrations of the individual antimicrobial agents. In particular, it is beneficial if the individual antimicrobial agents have differing patterns of bioavailability and different modes of action. The use of a blend of antimicrobial agents is often desirable to achieve a broader spectrum of antimicrobial activity against the various organisms, at reduced levels of the individual antimicrobial agents.

For example, U.S. Patent No. 6,224,579 describes polymeric medical devices comprising a combination of (a) silver compounds and (b) triclosan and/or other chlorinated phenols. The reference indicates that the combination of silver compounds and triclosan exhibits synergistic effects in preventing or inhibiting infection.

WO 2003/043593 describes an antimicrobial system that uses a cationic surf actant derived from the condensation of fatty acids and esterified dibasic amino acids, as an antimicrobial activity enhancer, in combination with common antimicrobial agents. In particular, this reference describes the use of lauric arginate (LAE) in combination with 2,4,4'-trichloro-2'-hydroxy-diphenylether (triclosan), 3,4,4-trichlorocarbanilid (triclocarban), 2-phenoxyethanol, chlorhexidine salts, hexetidine and cetylpyridinium salts, for cosmetic formulations and preparations directed to avoid body odour and to provide oral care.

JP-A-10-45563, JP-A-59-108707 and JP-A-10-203954 describe cosmetic compositions containing N-acyl basic amino acid derivatives and antimicrobial metals.

JP-A-2000-327546 discloses gel-like antiperspirant and deodorant compositions containing N-acyl basic amino acid derivatives and antimicrobial metals.

WO-A-2005000254 describes anti-plaque breath freshening consumable films containing N-acyl basic amino acid derivatives and antimicrobial metals.

US-A-2005031551 describes dentifrice compositions containing N-acyl basic amino acid derivatives and antimicrobial metals.

DE-A-1139738 describes photographic emulsion compositions comprising silver halides and various surface active agents.

There have been no reports to date on the medicinal use of a combination of (a) a cationic surfactant derived from the condensation of fatty acids and esterified dibasic amino acids, wherein the cationic surfactant is lauric arginate and (b) an antimicrobial metal, wherein the antimicrobial metal is silver or silver compound which has been discovered to exhibit a synergistic effect, resulting in an enhanced antimicrobial activity against a broader spectrum of the organisms.

### SUMMARY OF THE INVENTION

The present invention provides an antimicrobial composition for application directly to a wound comprising from 0.001% to 10% by weight based on the total weight of the composition of a cationic surfactant derived from the condensation of fatty acids and esterified dibasic amino acids, wherein the cationic surfactant is lauric arginate, according to the following formula: 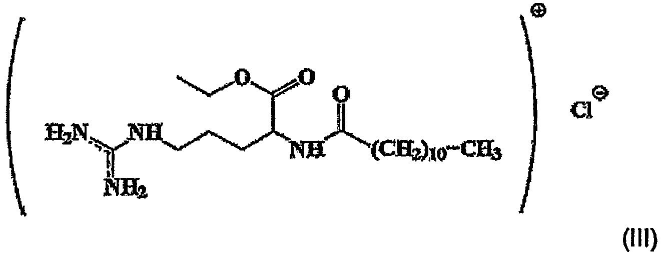 and from 0.001 to 5% by weight based on the total weight of the composition of at least one antimicrobial metal, wherein the antimicrobial metal is silver or a silver compound.

The present invention further provides a medical device selected from microcapsules, dressings, implants, wound closures, staples, meshes, controlled drug delivery systems, wound coverings, sutures, tissue adhesives, tissue sealants, hemostats, catheters, wound drainage tubes, arterial grafts, soft tissue patches, gloves, shunts, stents, guide wires and prosthetic devices, wherein the medical device incorporates an antimicrobial composition according to claim 1 or claim 2.

### DETAILED DESCRIPTION OF THE INVENTION

The antimicrobial properties of the device are improved by incorporation of lauric arginate (LAE) and elemental silver or alloys thereof or silver compounds therein.

The cationic surfactant described herein is derived from the condensation of fatty acids and esterified dibasic amino acids. More particularly, the cationic surfactant is lauric arginate (LAE - manufactured by Lamirsa Laboratories, Barcelona, Spain). Lauric arginate, a cationic preservative derived from lauric acid and arginine, in particular, the ethyl ester of the lauramide of the arginine monohydrochloride, can be used to protect against the growth of microorganisms. The chemical structure of LAE is described in formula (III):

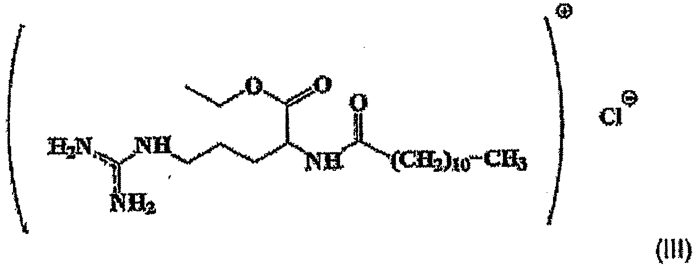

The antimicrobial metal referred to herein is silver or a silver compound.

The forms of the antimicrobial metal include, but not limited to elemental, compounds, alloys or mixtures thereof.

The antimicrobial metal is elemental silver, silver alloys, a silver compound or mixtures thereof. Such antimicrobial metals are especially potent against a broad spectrum of microorganisms. The silver compound referred to herein is a compound comprising a silver ion, linked to another molecule via a covalent or non-covalent linkage. An example of silver compound includes, but is not limited to, silver salts formed by silver ion with organic acids (e.g. acetic acids and fatty acids) or inorganic acids, such as silver sulfadiazine ("AdSD"), silver oxide ("Ag₂O"), silver carbonate ("Ag₂CO₃"), silver deoxycholate, silver salicylate, silver iodide, silver nitrate ("AgNO₃"), silver paraaminobenzoate, silver paraaminosalicylate, silver acetylsalicylate, silver ethylenediaminetetraacetic acid ("Ag EDTA"), silver picrate, silver protein, silver citrate, silver lactate, silver aceate and silver laurate.

Formulation of the antimicrobial composition according to the present invention may be of liquid (e.g. solutions) or solid form (e.g. powders). For instance, the antimicrobial composition may be applied directly to a wound. In another set of non-limiting embodiments, the present invention provides medical devices incorporated with the antimicrobial composition. The terms "incorporate", "incorporated", or "incorporating", as used herein, refer to combining the composition with the medical device by physical or chemical means. Examples include, but are not limited to, impregnating, dipping, soaking or coating a medical device with the antimicrobial composition or preparing the medical device by adding the antimicrobial composition to the material that the medical device by adding the antimicrobial composition to the material that the medical device is made from.

The medical devices that may be treated according to the invention are either fabricated from or coated or treated with a biomedical polymer and include, but are not limited to, microcapsules, dressings, implants, wound closures, staples, meshes, controlled drug delivery systems, wound coverings, fillers, sutures, tissue adhesives, tissue sealants, absorbable and non-absorbable hemostats, catheters including urinary catheters and vascular catheters (e.g., peripheral and central vascular catheters), wound drainage tubes, arterial grafts, soft tissue patches (such as polytetrafluroethylene ("PTFE") soft tissue patches), gloves, shunts, stents, tracheal catheters, wound dressings, sutures, guide wires and prosthetic devices (e.g., heart valves and LVADs). The present invention may be further applied to medical articles that have been prepared according to U.S. Patent Nos. 3,839,297; 4,027,676; 4,185,637 and 4,201,216.

The present invention provides for a stand alone antimicrobial composition comprising LAE in an amount from 0.001 % to 10% by weight based on the total weight of the composition and the concentration of the silver or silver compound ranges from 0.001 % to 5% by weight relative to total weight of the composition. More preferably, the antimicrobial composition of the invention comprises LAE in particular an amount from 0.01% to 1% by weight based on the total weight of the composition and the concentration of the silver or silver compound from 0.01 % to 1.5% by weight relative to total weight of the composition. In particular non-limiting embodiments of the invention, where the medical article is a suture, such as USP 2-0 polyglactin 910 sutures, the amount of LAE contained is 0.001-100 µg/cm, preferably 0.01-50 µg/cm and the amount of silver atom or ion is 0.001 to 100 µg/cm, preferably 0.01 to 50 µg/cm. Additionally, the invention provides for medical devices incorporated with the antimicrobial composition as described herein. The incorporation of LAE and an antimicrobial metal will enhance the antimicrobial activity of the device against a broader spectrum of pathogens.

It has been found that the combination of LAE with an antimicrobial metal has better activity than LAE alone or the antimicrobial metal alone, and that LAE functions as an antimicrobial enhancing agent. This enhancement of activity by LAE may be explained by its mode of action that damages the cytoplasm membrane of the microorganisms. LAE's metabolism in rats has been studied showing a fast absorption and metabolism into naturally-occuring amino acids and the lauric acid, which are eventually excreted as carbon dioxide and urea. Toxicological studies have demonstrated LAE is completely harmless to animals and humans.

The antimicrobial composition according to the present invention is characterized by its synergistic activity. It has now been found that the antimicrobial activity of the combination of LAE with the antimicrobial metal is higher than the activity displayed by each of the components when used individually at the same dosage. This enhanced antimicrobial efficacy allows the composition to have potent efficacy against a wide range of microorganisms at levels where the two compounds used individually would not be as effective. The use of this combination has been shown to enhance the antimicrobial spectrum against several organisms including, but not limited, *Tinea pedis, Tinea unguium, Tinea cruris,* or *Tinea capitis, S. aureus" MRSA, MRSE, GISA, S. epidermidis, E. coli, P. aeruginosa, K. pneumoniae, B. cepacia, E. cloacae, S. marcescens, S. pyogenes, S. agalacticae,E. faecalis-Vancomycin Resistant, E faecium, C. albicans and B. subtilis, Salmonella sp., Proteus sp., Acinetobacter sp.Aspergillus niger.*

The term "effective antimicrobial activity" refers to an ability to decrease the number of colony-forming units of a bacterium or yeast, in a defined period of time, by a factor of ten or more and preferably a factor of 100 or more.

While the following examples demonstrate certain embodiments of the invention, they are not to be interpreted as limiting the scope of the invention, but rather as contributing to a complete description of the invention.

### Example 1

### Evaluation of the Antimicrobial Efficacy of silver-LAE antimicrobial composition in vitro

The synergistic antimicrobial efficacy of the LAE and silver antimicrobial composition is illustrated by the results shown in Table 1 and was determined by the following protocol. Lauric arginate (LAE) and silver acetate stock solutions were prepared at the concentration of 1000ppm in sterile saline. Sequential dilutions of the above two stock solutions were then prepared also in sterile saline. A portion of 0.05 ml of each dilution was added to 0.95 ml of bacterial culture (trypticase soy broth containing 10⁶ CFU/ml). Controls contained similar amounts of saline in the test culture with no silver acetate or LAE. The test cultures were incubated at 37°C for 24 hr, the total viable bacteria were numerated by plate count on Trypticase® soy agar (BBL) containing inactivating agent. The plates were incubated at 37°C for 48 hr and reported as colony forming unit/ml (CFU/ml).

**Table 1. Synergistic effect of LAE with silver acetate (AgA) in vitro**

| | | | **CFU/ml** | |
|---|---|---|---|---|
| Treatment | *E. coli* | *E. faecium* | *C. albicans* | *P.aeruginosa* |
| Control | 1.4 x 10⁹ | 8.6 x 10⁸ | 5.3 x 10⁸ | 1.3 x 10⁹ |
| LAE 10 ppm | 1.0 x 10⁹ | 5.0 x 10⁷ | 6.0 x 10⁷ | 1.0 x 10⁹ |
| AgA 10 ppm | 1.0 x 10⁹ | 2.0 x 10⁶ | 4.0 x 10⁸ | 4.0 x 10⁸ |
| AgA 20 ppm | 1.0 x 10⁸ | 1.0 x 10⁶ | 1.0 x 10⁸ | 3.0 x 10⁶ |
| AgA/LAE 10/10 ppm | 3 x 10⁴ | <10 | <10 | 120 |
| AgA/LAE 20/10 ppm | <10 | <10 | <10 | <10 |

These results show the synergistic activity of lauric arginate (LAE) and silver acetate. In the control, the four tested cultures were grown to 5.3 x 10⁸ to 1.4 x 10⁹cfu/ml, in the absence of lauric arginate (LAE) or silver acetate (AgA). Comparing the relative reduction of viable bacteria by lauric arginate (LAE) and silver acetate, the addition of LAE alone at 10 ppm resulted in no inhibition against *E*. *coli and P. aeruginosa,* and a reduction of less than a power of 100 (2 log) against *E*. *faecium and C. albicans* compared to the control. The addition of silver acetate alone at 10 ppm resulted in less than 3 log reduction of viable bacteria for the four test microorganisms compared to the controls. Comparing the relative reduction of viable bacteria by the combined use of lauric arginate and silver acetate, the combination of 20 ppm of lauric arginate and 10 ppm of silver acetate resulted in a total elimination of the viable bacteria to undetectable level (<10 cfu/ml). As shown in Table 1, mixing the two antimicrobial agents, such as LAE and silver acetate provides much greater log reduction (5-7 logs) compared to use of LAE or silver acetate alone at similar concentration (0.5-2 log).

### Example 2

The synergistic effects of LAE and silver nitrate against *S*. *aureus* and *E. coli* in bacteria culture broth were also determined using the same protocol as described in Example1. The results are presented in Table 2.

**Table 2. Synergistic effect of LAE with silver nitrate (Ag NO₃) in vitro**

| | **CFU/ml** | |
|---|---|---|
| Treatment | *S. aureus* | *E. coli* |
| Control | 2.4 x 10⁹ | 1.4 x 10⁹ |
| LAE 10 ppm | 6.4 x 10⁸ | 1.1 x 10⁹ |
| Ag NO₃10 ppm | 9.3 x 10⁸ | 1.2 x 10⁹ |
| Ag NO₃20 ppm | 2.2 x 10⁸ | 1.0 x 10⁸ |
| Ag NO₃/ LAE 10/10 ppm | <10 | 4.2 x 10⁴ |
| Ag NO₃ / LAE 20/10 ppm | <10 | <10 |

### Example 3

### Antimicrobial Efficacy of suture coated with LAE and Silver acetate (AgA)

The synergistic antimicrobial efficacy described in Example 1 is demonstrated with medical devices made with LAE and silver-containing antimicrobial composition in Example 3. A series of USP standard size 2-0 uncoated polyglactin 910 sutures were coated with coating compositions containing silver acetate or LAE and their combinations. Silver acetate and LAE stock solutions were made in ethanol at concentration of 1 % for both solutions. The coating solutions were made by dissolving a L(-) lactide/glycolide copolymer containing 65 mole% lactide and 35 mole% glycolide (4.5%) and calcium stearate (4.5%) in ethyl acetate. Then, the silver acetate and LAE stock solutions were added to the coating solution at sequential concentrations and mixed thoroughly. The sutures were hand coated by dipping into the coating solution containing antimicrobial composition and then air dried at room temperature for 8 hr. The synergistic antimicrobial efficacy was evaluated by a zone of inhibition assay, in which the sutures were cut into a 5 cm section. A Petri dish was inoculated with about 10⁵ cfu/suture and a portion of 20 ml of TSA tempered at 47°C was added into the Petri dish. The inoculum was mixed thoroughly with the medium and the suture was placed in the middle of the Petri dish. The inoculated Petri dishes were incubated at 37°C for 48 hr and then the zone of inhibition was measured with a digital caliper.

The zone of inhibition assay was performed against *S. aureus* and *E*. *coli* over a two-day period. The results, shown in Tables 3, indicate that the combination of lauric arginate (LAE) and silver acetate resulted in superior antimicrobial activity against *Staphylococcus aureus, E. coli* and *C. albicans,* compared to the use of LAE and silver acetate individually. The untreated suture and suture coated with LAE or silver acetate exhibited no zones of inhibition, while the suture coated with the combination of LAE and silver acetate showed a distinct zone of inhibition. This synergistic effect demonstrates that a suture with good antimicrobial efficacy may be made with relatively lower concentration of LAE and silver acetate than if LAE or silver acetate were used alone. The reduced use of LAE and silver compounds would have less impact to the physical properties of the suture.

**Table 3. Antimicrobial efficacy of sutures coated with LAE and silver acetate (Ag A)**

| % of LAE or Ag in coating solution | Zone of inhibition(mm) | | |
|---|---|---|---|
| | *S. aureus* | *E. coli* | *C. albicans* |
| Control | 0 | 0 | 0 |
| 0.5% LAE | 0 | 0 | 0 |
| 0.2% AgA | 0 | 0 | 0 |
| 0.5% AgA | 0 | 0 | 0 |
| 0.5% LAE, 0.2%Ag | 3.5 | 2.0 | 3.2 |

## Claims

1. An antimicrobial composition for application directly to a wound comprising:
from 0.001% to 10% by weight based on the total weight of the composition of a cationic surfactant derived from the condensation of fatty acids and esterified dibasic amino acids, wherein the cationic surfactant is lauric arginate, according to the following formula: 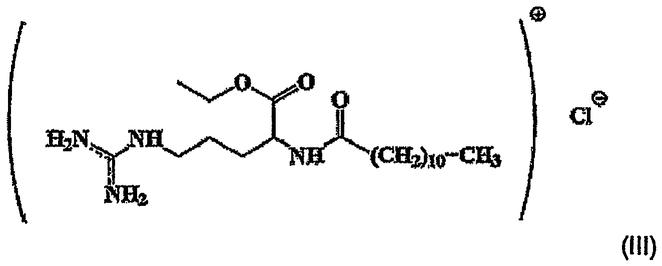
and from 0.001 to 5% by weight based on the total weight of the composition of at least one antimicrobial metal, wherein the antimicrobial metal is silver or a silver compound.

2. The antimicrobial composition of claim 1, wherein the concentration of said lauric arginate is between 0.1% and 1% by weight based on the total weight of the composition, and of said silver or silver compound is between 0.01 % and 1.5% by weight based on the total weight of the composition.

3. A medical device selected from microcapsules, dressings, implants, wound closures, staples, meshes, controlled drug delivery systems, wound coverings, sutures, tissue adhesives, tissue sealants, hemostats, catheters, wound drainage tubes, arterial grafts, soft tissue patches, gloves, shunts, stents, guide wires and prosthetic devices, wherein the medical device incorporates an antimicrobial composition according to claim 1 or claim 2.

4. The medical device of claim 3, wherein the medical device is a suture, and the suture contains from 0.001 to 100µg/cm of lauric arginate and from 0.001 to 100µg/cm of silver or silver ion.

5. The medical device of claim 4, wherein the suture contains from 0.01 to 50µg/cm of lauric arginate and from 0.01 to 50µg/cm of silver or silver ion.

## Patentansprüche

1. Antimikrobielle Zusammensetzung zur direkten Applikation auf eine Wunde, umfassend:
0,001 Gew.-% bis 10 Gew.-%, auf Basis des Gesamtgewichts der Zusammensetzung, eines kationischen Tensids aus der Kondensation von Fettsäuren und veresterten dibasischen Aminosäuren, worin das kationische Tensid Laurinsäurearginat ist, gemäß der folgenden Formel: 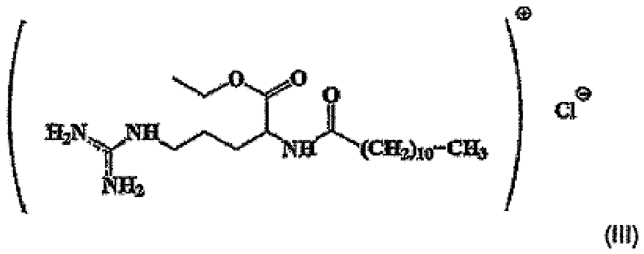
und 0,001 Gew.-% bis 5 Gew.-%, auf Basis des Gesamtgewichts der Zusammensetzung, zumindest eines antimikrobiellen Metalls, worin das antimikrobielle Metall Silber oder eine Silberverbindung ist.

2. Antimikrobielle Zusammensetzung nach Anspruch 1, worin die Konzentration von Laurinsäurearginat zwischen 0,1 Gew.-% und 1 Gew.-%, auf Basis des Gesamtgewichts der Zusammensetzung, beträgt, und die Konzentration von Silber oder der Silberverbindung zwischen 0,01 Gew.-% und 1,5 Gew.-%, auf Basis des Gesamtgewichts der Zusammensetzung, beträgt.

3. Medizinprodukt, ausgewählt unter Mikrokapseln, Verbänden, Implantaten, Wundverschlüssen, Klammern, Netzen, Systemen mit kontrollierter Arzneimittelfreisetzung, Wundabdeckungen, Nahtmaterialien, Gewebeklebern, Gewebedichtmitteln, hämostatischen Mitteln, Kathetern, Wunddrainageschläuchen, arteriellen Transplantaten, Gewebepatches, Handschuhen, Shunts, Stents, Führungsdrähten und Prothesenvorrichtungen, worin das Medizinprodukt eine antimikrobielle Zusammensetzung nach Anspruch 1 oder Anspruch 2 enthält.

4. Medizinprodukt nach Anspruch 3, worin das Medizinprodukt ein Nahtmaterial ist und das Nahtmaterial 0,001 bis 100 µg/cm Laurinsäurearginat und 0,001 bis 100 µg/cm Silber oder Silberionen enthält.

5. Medizinprodukt nach Anspruch 4, worin das Nahtmaterial 0,01 bis 50 µg/cm Laurinsäurearginat und 0,01 bis 50 µg/cm Silber oder Silberionen enthält.

## Revendications

1. Composition antimicrobienne destinée à une application directement à une plaie, comprenant :
de 0,001% à 10% en poids, sur la base du poids total de la composition, d'un agent tensioactif cationique dérivé de la condensation d'acides gras et d'acides aminés dibasiques estérifiés, où l'agent tensioactif cationique est l'arginate laurique, répondant à la formule suivante : 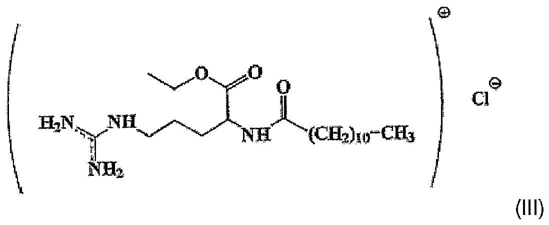
et de 0,001 à 5% en poids, sur la base du poids total de la composition, d'au moins un métal antimicrobien, où le métal antimicrobien est l'argent ou un composé à base d'argent.

2. Composition antimicrobienne selon la revendication 1, **caractérisée en ce que** la concentration en ledit arginate laurique se trouve entre 0,1% et 1% en poids, sur la base du poids total de la composition, et celle en ledit argent ou composé à base d'argent se trouve entre 0,01% et 1,5% en poids, sur la base du poids total de la composition.

3. Dispositif médical choisi parmi les microcapsules, les pansements, les implants, les fermetures de plaies, les agrafes, les tulles, les systèmes d'administration contrôlée de médicaments, les revêtements de plaies, les sutures, les adhésifs tissulaires, les obturants tissulaires, les pinces hémostatiques, les cathéters, les drains pour plaies, les greffes artérielles, les patchs pour tissus mous, les gants, les shunts, les stents, les broches de guidage et les prothèses, **caractérisé en ce que** le dispositif médical incorpore une composition antimicrobienne selon la revendication 1 ou la revendication 2.

4. Dispositif médical selon la revendication 3, **caractérisé en ce que** le dispositif médical est une suture, et la suture contient de 0,001 à 100 µg/cm d'arginate laurique et de 0,001 à 100 µg/cm d'argent ou d'ion d'argent.

5. Dispositif médical selon la revendication 4, **caractérisé en ce que** la suture contient de 0,01 à 50 µg/cm d'arginate laurique et de 0,01 à 50 µg/cm d'argent ou d'ion d'argent.
